# EUROPÄISCHE PATENTSCHRIFT

(11) **EP 1 525 439 B1**
(45) Veröffentlichungstag und Bekanntmachung des Hinweises auf die Patenterteilung: **26.07.2017**
(21) Anmeldenummer: 03787604.2
(22) Anmeldetag: 20.06.2003
(51) Int. Cl.: G01G 19/414, G07G 1/12, G01G 23/37

(54) **KOMBINATION EINER WAAGE UND EINER REGISTRIERKASSE MIT EINER GEMEINSAMEN KUNDENANZEIGE**
SCALE/CASH REGISTER COMBINATION COMPRISING A SINGLE COMMON CUSTOMER DISPLAY UNIT
COMBINAISON D'UNE BALANCE ET D'UNE CAISSE ENREGISTREUSE COMPRENANT UN SEUL AFFICHAGE COMMUN

(30) Priorität: 31.07.2002 DE 20211763 U; 13.02.2003 DE 20302399 U
(43) Veröffentlichungstag der Anmeldung: 27.04.2005
(73) Patentinhaber: Wincor Nixdorf International GmbH, 33106 Paderborn (DE)
(72) Erfinder: BAITZ, Guenter, 13629 Berlin (DE); LOHNSTEIN, Wolfgang, 12205 Berlin (DE)
(74) Vertreter: Viering, Jentschura & Partner mbB Patent- und Rechtsanwälte
(86) Internationale Anmeldenummer: PCT/DE2003/002055
(87) Internationale Veröffentlichungsnummer: WO 2004/017032

(56) Entgegenhaltungen:
- EP-A- 1 061 486
- WO-A-95/14367
- DE-A- 3 003 255
- DE-A- 4 408 549
- DE-A1- 2 614 327
- US-A- 5 174 399
- US-A- 5 731 799
- KREUZER M: "MULTICHANNEL SYSTEM FOR HIGH PRECISION STATIC AND FAST DYNAMIC MEASUREMENTS" MEASUREMENT, INSTITUTE OF MEASUREMENT AND CONTROL. LONDON, GB, Bd. 10, Nr. 1, 1992, Seiten 8-13, XP000265526 ISSN: 0263-2241

## Beschreibung

Die Erfindung betrifft eine Kombination einer Waage und einer Registrierkasse mit einer beiden gemeinsamen Kundenanzeigeeinrichtung. Sie geht aus von der DE 44 08 549 A1.

Waagen im Handelsbereich haben eine Anzeige, auf der das Gewicht einer gewogenen Ware angezeigt wird. Nach den gesetzlichen Bestimmungen müssen Gewichtsmesseinrichtungen geeicht und von der Eichbehörde zugelassen sein, wenn sie zur Abrechnung dienen.

Häufig werden solche Waagen gemeinsam mit einer Kasse benutzt, wobei die Kasse die Preise der gewogenen Waren zusammen mit anderen, nicht zu wiegenden Waren erfasst. Beide Geräte haben dem Kunden zugewandte Anzeigen, sogenannte Kundenanzeigen, um die Menge, den Grundpreis und den jeweiligen Preis anzuzeigen. Soll dem Kunden auch ein Beleg über die Warenmenge mitgegeben werden, so sind zwei Belegdrucker erforderlich, einer an der Waage und einer an der Kasse. Eine solche Kombination von Waage und Kasse ist in der DE 30 03 255 A1 dargestellt.

Die DE 26 14 327 beschreibt ein typisches Wägesystem bestehend aus einer Wägevorrichtung und Speichereinheiten, in denen das Taragewicht des Verpackungsmaterials und das Bruttogewicht eines Artikels und dessen Verpackung gespeichert wird. Ergänzt wird dieses System durch Subtrahier- und Multiplizierstufen zur Berechnung des endgültigen Nettopreises einer Ware.

Wünschenswert ist eine einzige Einrichtung mit nur einer Anzeige und einem Belegdrucker, wobei die Anzeige und der Beleg sowohl die Gewichtswerte als auch die Preise der gewogenen Waren enthält als auch zur Anzeige und zum Ausdruck von Stückzahl, Bezeichnung und Preis sonstiger, nicht gewogener Waren verwendet werden kann. Eine gemeinsame Anzeige ist zulässig, wenn die angezeigten Daten nicht mit Gewichtswerten oder daraus abgeleiteten Preisen verwechselt werden können. Bestimmungen hierzu finden sich in der DIN EN 45 501, die den Empfehlungen R 76-1 der "Organisation Internationale de Metrologie Legale", O1ML, entspricht.

In der DE 44 08 549 A1 ist bereits eine Kombination einer Kasse und einer Waage mit einer beiden Geräten gemeinsamen Kundenanzeige vorgeschlagen worden, wobei die Waagenelektronik nur solche Anzeigedaten zulässt, die mit der aktuellen Wägung verträglich sind. Die Auswerteeinheit führt von sich aus keine Ausgaben auf die Anzeigeeinheit durch. Vielmehr wird zunächst das Wägeergebnis von der Auswerteeinheit nach Empfang der Wägedaten von dem Messaufnehmer in die Kasse übertragen. Dort wird über eine Preistabelle ein Preis bestimmt, eine Anzeige zusammengestellt und an die Auswerteeinheit gesandt. Die Auswerteeinheit überprüft die gewünschten Anzeigetexte daraufhin, dass sie nicht unzulässig sind, und zeigt sie an.

Die vorgenannte Kombination der Kasse mit einer Waage hat den Nachteil, dass die Auswerteeinheit direkt mit dem PC-Bus verbunden ist, was sowohl eine spezielle Betriebssystem- als auch eine spezielle Anwendersoftware voraussetzt. Des Weiteren ist es für Kunden ungewohnt Preis- und Mengeninformationen von der Kundenanzeige einer Waage abzulesen.

Aus der WO 95/14367 A1 ist ein als 'Elektronikbox' bezeichnetes Steuergerät bekannt, welches nach dem PC-Prinzip aufgebaut ist. Es enthält eine Basisleiterplatte, deren Hinterkante u. a. mit einem Stecker für eine Tastatur und mit Anschlussbuchsen von seriellen und parallelen Peripherieschnittstellen bestückt ist. Parallel zu der Basisleiterplatte sind Zusatzleiterplatten angeordnet, die nach dem PC-AT-Standard aufgebaut sind und an einer zu der Hinterkante der Basisleiterplatte parallelen Kante Anschlussstecker für weitere Peripherieanschlüsse tragen. Die Zusatzleiterplatten sind über eine Bus-Erweiterungskarte mit der Basisleiterplatte steckverbunden.

Aufgabe der Erfindung ist es, eine Kombination einer Kasse mit einer Waage und nur einer Kundenanzeige vorzuschlagen, die mit einer bisher gebräuchlichen Kassensoftware auskommt.

Die Aufgabe wird durch die Merkmale des Anspruchs 1 gelöst.

Erfindungsgemäß kommt ein Multiplexer zum Einsatz, dessen einer Dateneingang mit Wägedaten der Waage und dessen anderer Eingang mit von der Datenverarbeitungseinheit ausgegebenen Preis- und/oder Produktdaten beaufschlagt ist, wobei der eine Eingang durch ein Multiplex-Umschaltsignal aktiv geschaltet wird, wenn die Wägephase beginnt. Die Umschaltung erfolgt also durch die Waage selbst, ohne dass die anzuzeigenden Wägedaten in der Datenverarbeitungseinheit für die Anzeige aufbereitet oder von ihr irgendwelche Gültigkeitsbewertungen vorgenommen werden müssten. Die Auswerteeinheit erzeugt vielmehr selbst das Multiplex-Umschaltsignal.

Entsprechend einer bevorzugten Weiterbildung der Erfindung sind der Auswerteeinheit ein Nullstell- und ein Tarasignal zuführbar, welche jeweils bewirken, dass die Wägedaten den Wert Null annehmen und welche von bei der Registrierkasse angeordneten Befehlstasten erzeugt werden. Damit ist zum einen eine ordnungsgemäße Wägung sichergestellt, zum anderen kann damit auf die Anzeige von Preis- und Warendaten umgeschaltet werden, wenn ohnehin kein Wägegut auf der Waage liegt.

Die Auswerteeinheit ist mit einem Eichschalter versehen, der in einem versiegelbaren Gehäuse angeordnet ist, so dass die Waage den eichgesetzlichen Vorschriften entspricht.

Weitere Einzelheiten und Vorteile der Erfindung sind der Beschreibung in Verbindung mit der beigefügten Zeichnung zu entnehmen.

In der Zeichnung zeigt:
- Figur 1: ein Blockschaltbild einer ersten Kombination einer Kasse mit einer Waage,
- Figur 2: ein Blockschaltbild einer zweiten Kombination einer Kasse mit einer Waage,
- Figur 3: ein Blockschaltbild einer dritten Kombination einer Kasse mit einer Waage.

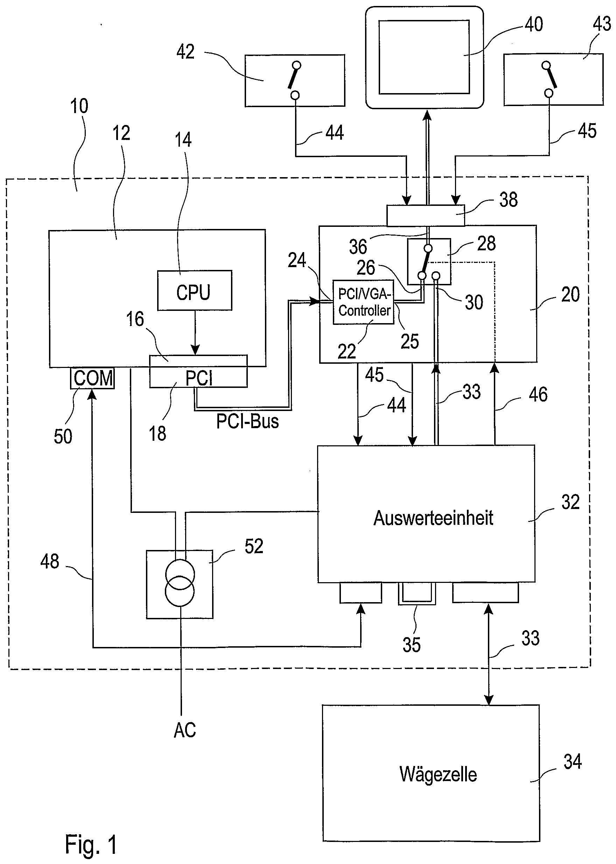

In Figur 1 ist eine nach dem PC-Prinzip aufgebaute Elektronikbox 10 mit unterbrochenen Linien dargestellt. Darin ist auf einer Basisleiterplatte 12 eine häufig als CPU bezeichnete Datenverarbeitungseinheit 14 angeordnet. Von der Datenverarbeitungseinheit 14 wird ein als PCI-Bus ausgeführter Daten-/Adressbus 16 gesteuert, an welchen, wie in der WO 95/14367 A1 beschrieben, über eine Bus-Erweiterungskarte 18 mehrere Peripheriesteuerkarten anschließbar sind, von denen, da einzig erfindungswesentlich, nur eine Videobaugruppenkarte 20 dargestellt ist.

Die Videobaugruppenkarte 20 enthält eine allgemein als VGA-Controller bezeichnete Sichtgerätesteuereinheit 22, deren Eingang 24 über die Bus-Erweiterungskarte 18 mit dem Daten-/Adressbus 16 verbunden ist. Die Sichtgerätesteuereinheit 22 wandelt die auf dem Daten-/Adressbus 16 geführten anzuzeigenden Preis- und Produktdaten in Videosignale für eine weiter unten beschriebene Kundenanzeige 40 um. Der Ausgang 25 der Sichtgerätesteuereinheit 22 ist auf einen ersten Eingang 26 eines Videomultiplexers 28 geführt. Ein zweiter Eingang 30 des Videomultiplexers 28 ist mit Videosignalen beaufschlagt, welche von einer Auswerteeinheit 32 für über eine Wägedatenleitung 33 von einer Wägezelle 34 gelieferte Wägedaten bereitgestellt werden. Die Auswerteeinheit 32 und der gekapselte und versiegelte Eichschalter 35 und die Wägezelle 34 bilden zusammen eine eichfähige Waage.

Der Ausgang 36 des Videomultiplexers 28 führt auf einen Bildschirmstecker 38, an den die als VGA/4-LCD-Sichtgerät ausgebildete Kundenanzeige 40 angeschlossen ist.

Neben der Kundenanzeige 40 ist eine Nullstelltaste 42 und eine Tarataste 43 dargestellt, deren Signale 44 und 45 über freie Kontakte des Bildschirmsteckers 38 und der Videobaugruppenkarte 20 der Auswerteeinheit 32 zugeführt werden. Das Nullstellsignal 44 stellt den Wägedaten-Wert auf Null, unabhängig vom tatsächlichen Ausgangssignal der Wägezelle 34. Damit lassen sich Ungenauigkeiten bei der Aufstellung der Waage korrigieren. Das Tarasignal 45 stellt den Wägedaten-Wert auf Null und kompensiert beispielsweise das Gewicht eines Warenbehältnisses.

Die Auswerteeinheit 32 erzeugt ein Multiplex-Umschaltsignal 46, welches den Videomultiplexer 28 immer dann für die Wägedaten aktiv schaltet, wenn die Wägephase beginnt. Damit ist gewährleistet, dass auf der Kundenanzeige 40 vorrangig das Gewicht einer Ware angezeigt wird. Das Warengewicht wird über eine serielle Datenverbindung 48 auch einer seriellen Schnittstelle 50 der Datenverarbeitungseinheit 14 zugeführt. Die Auswerteeinheit 32 wird aus einer Stromversorgungseinheit 52 der Elektronikbox 10 mit elektrischer Energie versorgt.

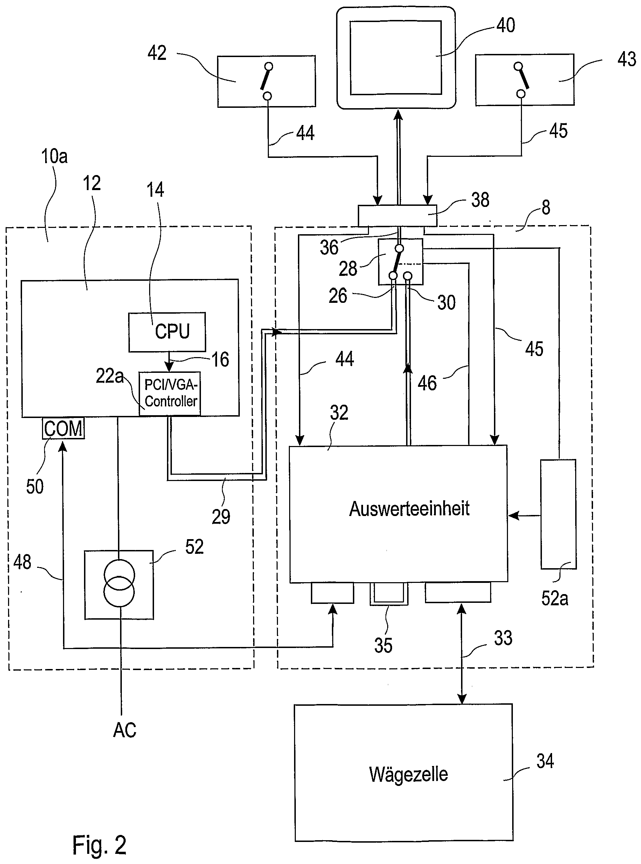

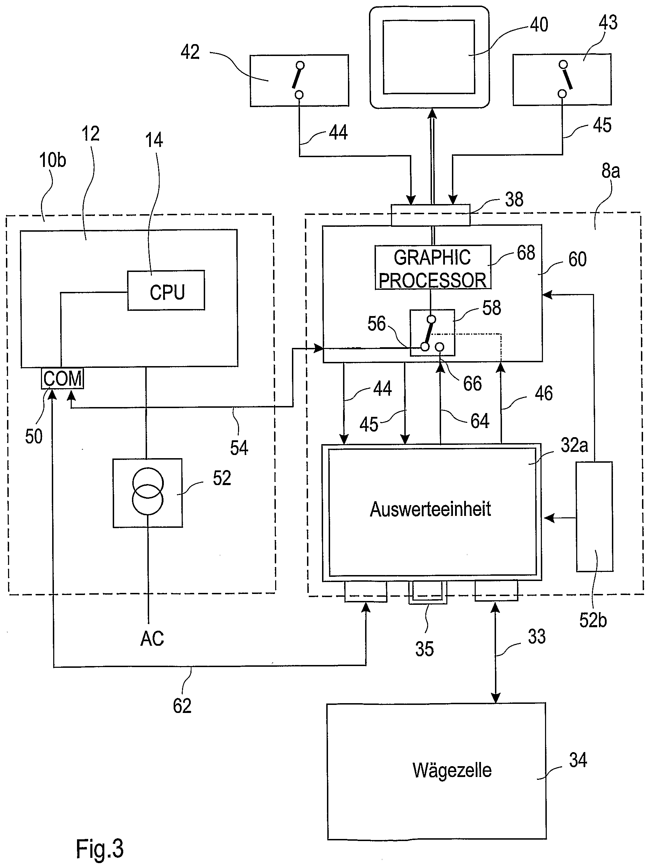

In einem zweiten Ausführungsbeispiel können einzelne Funktionsbaugruppen auch räumlich voneinander getrennt in zwei unterschiedlichen Gehäusen angeordnet sein, wie dies in Figur 2 als Blockschaltbild dargestellt ist. Funktionsgleiche Elemente sind darin und in einem weiter unten in Zusammenhang mit Figur 3 beschriebenen dritten Ausführungsbeispiel mit gleichen Bezugszeichen gekennzeichnet. In Figur 2 sind in einem durch unterbrochene Linien dargestellten Gehäuse 8 der Videomultiplexer 28, die Auswerteeinheit 32 und ein beide Baugruppen speisendes zweites Stromversorgungsteil 52a angeordnet. Eine zweite Sichtgerätesteuereinheit 22a ist hingegen als Baugruppe entweder als integraler Bestandteil der Basisleiterplatte 12 oder als PCI-Steckbaugruppe auf der Basisleiterplatte 12 in der Elektronikbox 10a angeordnet. Eine Videoverbindung 29 führt von der zweiten Sichtgerätesteuereinheit 22a zum Videomultiplexer 28 und eine weitere Datenverbindung 48 von der seriellen Schnittstelle 50 der Basisleiterplatte 12 zur Auswerteeinheit 32. Die Elektronikbox 10a wird wie oben beschrieben von einem Stromversorgungsteil 52 mit Strom versorgt.

Figur 3 zeigt ein Blockschaltbild eines dritten Ausführungsbeispiels einer Kombination einer Kasse mit einer Waage. Mit unterbrochenen Linien ist eine weitere nach dem PC-Prinzip aufgebaute Elektronikbox 10b dargestellt. Darin ist auf einer Basisleiterplatte 12 wiederum eine Datenverarbeitungseinheit 14 angeordnet. Eine zweite serielle Datenverbindung 54 führt von der Datenverarbeitungseinheit 14 zu einem ersten Eingang 56 eines Datenmultiplexers 58, der auf einer weiteren Videobaugruppenkarte 60 angeordnet ist. Eine dritte serielle Datenverbindung 62 führt zu einer zweiten Auswerteeinheit 32a, die sich von der ersten Auswerteeinheit 32 dadurch unterscheidet, dass sie die Wägedaten als ASCII-Zeichen über eine serielle Wägedatenleitung 64 bereit stellt. Diese ist auf einen zweiten Eingang 66 des Datenmultiplexers 58 geführt. Letzterer wird in der oben beschriebenen Weise über ein von der zweiten Auswerteeinheit 32a erzeugtes Multiplex-Umschaltsignal 46 gesteuert.

Der Ausgang des Datenmultiplexers 58 ist mit einem Graphic Processor 68 verbunden, der die seriellen Preis- und/oder Produktdaten und die Wägedaten in Videosignale wandelt. Diese werden über den Bildschirmstecker 38 der Kundenanzeige 40 zugeführt.

Die zweite Auswerteeinheit 32a und die weitere Videobaugruppenkarte 60 sind in einem separaten Gehäuse 8a angeordnet. Sie werden von einem darin integrierten Stromversorgungsgerät 52b mit elektrischer Energie versorgt.

Die zweite und die dritte serielle Datenverbindung 54, 62 kann auch nach dem USB-Standard ausgeführt sein. Handelt es sich dabei um eine sogenannte Power-USB-Verbindung, in der bekanntlich Energieversorgungsleitungen mitgeführt werden, kann das Stromversorgungsgerät 52b entfallen. Die getrennt dargestellten seriellen Datenverbindungen 54, 62 sind als logische Verbindungen zu verstehen, die selbstverständlich über eine einzige Leitung geführt werden können.

Die Verwendung einer seriellen Datenverbindung zwischen der Elektronikbox 10b und dem separaten Gehäuse 8a hat den Vorteil, dass beliebig lange Leitungen verwendet werden können, die zudem eine geringere Aderzahl haben können als bei einer Übertragung von Daten im Videoformat. Auch ist ein Multiplexer für serielle Datenströme preiswerter als ein Videomultiplexer. Ferner ist eine Kombination einer Waage mit einer Registrierkasse nach dem dritten Ausführungsbeispiel besonders gut für die nachträgliche Ausrüstung einer Registrierkasse mit einer Waage geeignet, da nur Software-Änderungen erforderlich sind.

Aus der vorangegangenen Beschreibung ist ersichtlich, dass anzuzeigende Wägedaten direkt der Kundenanzeige 40 zugeführt werden, ohne die Datenverarbeitungseinheit 14 zu durchlaufen. Damit besteht auch keine Möglichkeit, die angezeigten Wägedaten zu manipulieren. Im übrigen kann die bisher benutzte Kassensoftware ohne Änderung benutzt werden.

### Bezugszeichenliste

- 8: Gehäuse
- 8a: zweites Gehäuse
- 10: Elektronikbox
- 10a: zweite Elektronikbox
- 10b: dritte Elektronikbox
- 12: Basisleiterplatte
- 14: Datenverarbeitungseinheit
- 16: Daten-/Adressbus
- 18: Bus-Erweiterungskarte
- 20: Videobaugruppenkarte
- 22: Sichtgerätesteuereinheit
- 22a: zweite Sichtgerätesteuereinheit
- 24: Eingang von 22
- 25: Ausgang von 22
- 26: erster Eingang von 28
- 28: Videomultiplexer
- 29: Videoverbindung
- 30: zweiter Eingang von 28
- 32: Auswerteeinheit
- 32a: zweite Auswerteeinheit
- 33: Wägedatenleitung
- 34: Wägezelle
- 36: Ausgang von 28
- 38: Bildschirmstecker
- 40: Kundenanzeige
- 42: Nullstelltaste
- 43: Tarataste
- 44: Nullstellsignal
- 45: Tarasignal
- 46: Multiplex-Umschaltsignal
- 48: Datenverbindung
- 50: Serielle Schnittstelle von 12
- 52: Stromversorgungsteil
- 52a: zweites Stromversorgungsteil
- 52b: drittes Stromversorgungsteil
- 54: zweite serielle Datenverbindung
- 56: erster Eingang von 58
- 58: Datenmultiplexer
- 60: weitere Videobaugruppenkarte
- 62: dritte serielle Datenverbindung
- 64: serielle Wägedatenleitung
- 66: zweiter Eingang von 58
- 68: Graphic Processor

## Patentansprüche

1. Kombination einer Waage (32, 34) mit einer Registrierkasse mit einer beiden gemeinsamen Kundenanzeigeeinrichtung (40), wobei die Waage eine Wägezelle (34) und eine Auswerteeinheit (32, 32a) und die Registrierkasse eine in eine Elektronikbox (10, 10a, 10b) eingebaute Datenverarbeitungseinheit (14) umfasst, welch letztere zumindest mit einer Sichtgerätesteuereinheit (22, 22a) verbunden ist,
**gekennzeichnet durch**
einen Multiplexer (28; 58), dessen einer Dateneingang (30; 66) mit Wägedaten der Waage (32, 34) und dessen anderer Eingang (26; 56) mit von der Datenverarbeitungseinheit (14) ausgegebenen Preis- und/oder Produktdaten beaufschlagbar ist, wobei der eine Dateneingang (30; 66) derart eingerichtet ist, dass dieser durch ein Multiplex-Umschaltsignal (46) aktiv geschaltet wird, wenn die Wägedaten einen von Null verschiedenen Wert haben.

2. Anordnung nach Anspruch 1, wobei die Auswerteeinheit (32, 32a) eingerichtet ist, dass Multiplex-Umschaltsignal (46) zu erzeugen.

3. Anordnung nach Anspruch 1 oder 2, deren Auswerteeinheit (32, 32a) ein Nullstellsignal (44) und ein Tarasignal (45) zuführbar ist, welche bewirken, dass die Wägedaten den Wert Null annehmen, und welche von bei der Registrierkasse angeordneten Befehlstasten (42, 43) erzeugbar sind.

4. Anordnung nach einem der Ansprüche 1 bis 3, bei der die Wägedaten von der Auswerteeinheit (32, 32a) über eine serielle Schnittstelle (50) der Datenverarbeitungseinheit (14) zuführbar sind.

5. Anordnung nach einem der Ansprüche 1 bis 4, mit einem Eichschalter (35), der in der Auswerteeinheit (32, 32a) in einem versiegelbaren Gehäuse angeordnet ist.

6. Anordnung nach wenigstens einem der vorhergehenden Ansprüche, wobei die Elektronikbox (10) nach dem PC-Prinzip aufgebaut ist.

7. Anordnung nach einem der vorhergehenden Ansprüche, deren Multiplexer ein Videomultiplexer (28) ist, der mit der Sichtgerätesteuereinheit (22) zu einer Videobaugruppenkarte (20) zusammengefasst ist.

8. Anordnung nach Anspruch 7, deren Videobaugruppenkarte (20) in die Elektronikbox (10) einbaubar oder eingebaut und an einen internen Daten-/Adressbus (16) der Datenverarbeitungseinheit (14) anschließbar oder angeschlossen ist, über welchen ihr wenigstens die Preis- und/oder Produktdaten zuführbar sind.

9. Anordnung nach einem der Ansprüche 1 bis 6, deren Multiplexer ein in einem von der Elektronikbox (10a) getrennten Gehäuse (8) angeordneter Videomultiplexer (28) ist und deren Sichtgerätesteuereinheit (22a) in der Elektronikbox (10a) angeordnet ist, wo die Sichtgerätesteuereinheit (22a) an einen Daten-/Adressbus (16) der Datenverarbeitungseinheit (14) angeschlossen ist und wobei die Sichtgerätesteuereinheit (22a) mit dem Videomultiplexer (28) über eine Videoleitung (29) verbunden ist.

10. Anordnung nach einem der Ansprüche 1 bis 6, deren Multiplexer (58) wenigstens die Preis- und/oder Produktdaten sowie die Wägedaten in einem Zeichen-Code jeweils über eine serielle Schnittstelle (54, 64), zuführbar sind und bei der ein die zeichencodierten Daten in Videodaten wandelnder Graphic-Processor (68) dem Multiplexer (58) nachgeschaltet ist.

11. Anordnung nach einem der vorhergehenden Ansprüche, deren Auswerteeinheit (32, 32a) oder auch zusätzlich deren Wägezelle (34) in die Elektronikbox (10) eingebaut ist.

12. Anordnung nach Anspruch 11, deren Auswerteeinheit (32) aus einem Stromversorgungsteil (52) der Elektronikbox (10) mit elektrischer Energie versorgbar ist.

13. Anordnung nach einem oder mehreren der Ansprüche 1 bis 9,
**dadurch gekennzeichnet,**
**dass** zumindest der Multiplexer (28; 58) und die Auswerteeinheit (32; 32a) in einem von der Elektronikbox (10a; 10b) getrennten Gehäuse (8; 8a) angeordnet sind.

14. Anordnung nach Anspruch 13, bei der die in dem getrennten Gehäuse (8; 8a) angeordneten Baugruppen (28; 58, 32; 32a) von einem in dem Gehäuse (8; 8a) angeordneten zweiten Stromversorgungsteil (52a) mit elektrischer Energie versorgbar sind.

15. Anordnung nach Anspruch 13, bei der die in dem getrennten Gehäuse (8; 8a) angeordneten Baugruppen (28; 58, 32; 32a) von dem in der Elektronikbox (10a; 10b) befindlichen Stromversorgungsteil (52) über eine Energieversorgungsleitung mit elektrischer Energie versorgbar sind welche mit einer seriellen Datenverbindung (62) mitgeführt wird.

## Claims

1. Combination of a scale (32, 34) with a cash register with a common customer display device (40), wherein the scale includes a load cell (34) and an evaluation unit (32, 32a) and the cash register includes a data processing unit (14) built into an electronic box (10, 10a, 10b) wherein the data processing unit (14) is at least connected with a visual device control unit (22, 22a),
**characterized by**
a multiplexer (28; 58), wherein one data input (30; 66) thereof can be supplied with load data of the scale (32; 34) and the other input (26; 56) thereof can be supplied with price and/or product data output by the data processing unit (14), wherein the one data input (30, 66) is configured such that it is switched active by a multiplex switching signal (46), when the load data have a value different from zero.

2. Assembly according to claim 1, wherein the evaluation unit (32, 32a) is configured to generate the multiplex switching signal (46).

3. Assembly according to claim 1 or claim 2, wherein the evaluation unit (32, 32a) thereof can be supplied with a set-zero signal (44) and a tare signal (45) which cause the load data to attain the value zero and which can be generated by command keys (42, 43) disposed at the cash register.

4. Assembly according to any one of claims 1 to 3, wherein the load data can be supplied from the evaluation unit (32, 32a) to the data processing unit (14) via a serial interface (50).

5. Assembly according to one of claims 1 to 4, having a gauging switch (35) disposed in the evaluation unit (32, 32a) inside a sealable housing.

6. Assembly according to at least one of the preceding claims, wherein the electronic box (10) is constructed following the PC-principle.

7. Assembly according to one of the preceding claims, wherein the multiplexer thereof is a video multiplexer (28) that is combined with the visual device control unit (22) to a video module card (20).

8. Assembly according to claim 7, wherein the video module card (20) thereof is or can be built into the electronic box (10) and is or can be connected to an internal data/address bus (16) of the data processing unit (14) via which at least the price and/or product data can supplied thereto.

9. Assembly according to one of claims 1 to 6, wherein the multiplexer thereof is a video multiplexer (28) arranged in a housing (8) separate from the electronic box (10a) and wherein the visual device control unit (22a) thereof is disposed inside the electronic box (10a) where the visual device control unit (22a) is connected to a data/address bus (16) of the data processing unit (14) and wherein the visual device control unit (22a) is connected to the video multiplexer (28) via a video line (29).

10. Assembly according to one of claims 1 to 6, wherein the multiplexer (58) thereof can be supplied with at least the price and/or product data and the load data in a character code, respectively via a serial interface (54, 64) and wherein a graphic processor (68) converting the character encoded data into video data is connected downstream from the multiplexer (58).

11. Assembly according to one of the preceding claims, wherein the evaluation unit (32, 32a) thereof or additionally the load cell (34) thereof is built into the electronic box (10).

12. Assembly according claim 11, wherein the evaluation unit (32) thereof can be supplied with electric energy from a power supply member (52) of the electronic box (10).

13. Assembly according to one or multiple of claims 1 to 9,
**characterized in that** at least the multiplexer (28, 58) and the evaluation unit (32, 32a) are disposed inside a housing (8, 8a) separate from the electronic box (10a, 10b)

14. Assembly according to claim 13, wherein the modules (28, 58, 32, 32a) disposed inside the separate housing (8, 8a) can be supplied with electric energy from a second power supply member (52a) disposed inside the housing (8, 8a).

15. Assembly according to claim 13, wherein the modules (28, 58, 32, 32a) disposed inside the separate housing (8, 8a) can be supplied with electric energy from the power supply member (52) disposed inside the electronic box (10a, 10b) via an energy supply line guided together with a serial data connection (62).

## Revendications

1. Combinaison d'une balance (32, 34) avec une caisse enregistreuse, comprenant un dispositif d'affichage de client (40) commun aux deux, la balance comprenant une cellule de pesage (34) et une unité d'interprétation (32, 32a), et la caisse enregistreuse une unité de traitement de données (14) intégrée dans un boîtier électronique (10, 10a, 10b), cette dernière étant au moins reliée à une unité de commande d'écran de visualisation (22, 22a),
**caractérisée par**
un multiplexeur (28 ; 58) dont une entrée de données (30 ; 66) peut être alimentée avec les données de pesage de la balance (32, 34) et dont l'autre entrée (26 ; 56) peut être alimentée avec des données de prix et/ou de produit délivrées par l'unité de traitement de données (14), ladite entrée de données (30 ; 66) étant conçue de telle sorte que celle-ci est commutée à l'état actif par un signal d'inversion multiplexé (46) lorsque les données de pesage ont une valeur différente de zéro.

2. Arrangement selon la revendication 1, l'unité d'interprétation (32, 32a) étant conçue pour générer des signaux d'inversion multiplexés (46).

3. Arrangement selon la revendication 1 ou 2, à l'unité d'interprétation (32, 32a) duquel peut être acheminé un signal de mise à zéro (44) et un signal de tarage (45), lesquels ont pour effet que les données de pesage prennent la valeur zéro et lequel peut être généré par des touches d'instruction (42, 43) présentes au niveau de la caisse enregistreuse.

4. Arrangement selon l'une des revendications 1 à 3, avec lequel les données de pesage peuvent être acheminées par l'unité d'interprétation (14) à l'unité de traitement de données (14) par le biais d'une interface série (50).

5. Arrangement selon l'une des revendications 1 à 4, comprenant un commutateur d'étalonnage (35) qui est disposé dans l'unité d'interprétation (32, 32a) dans un boîtier qui peut être scellé.

6. Arrangement selon au moins l'une des revendications précédentes, le boîtier électronique (10) étant construit selon le principe du PC.

7. Arrangement selon au moins l'une des revendications précédentes, dont le multiplexeur est un multiplexeur vidéo (28) qui est regroupé avec l'unité de commande d'écran de visualisation (22) en une carte de sous-ensemble vidéo (20).

8. Arrangement selon la revendication 7, dont la carte de sous-ensemble vidéo (20) peut être intégrée ou est intégrée dans le boîtier électronique (10) et laquelle peut être raccordée ou est raccordée à un bus de données/d'adresses interne (16) de l'unité de traitement de données (14), par le biais duquel peuvent lui être acheminées au moins les données de prix et/ou de produit.

9. Arrangement selon l'une des revendications 1 à 6, dont le multiplexeur est un multiplexeur vidéo (28) disposé dans un boîtier (8) séparé du boîtier électronique (10a) et dont l'unité de commande d'écran de visualisation (22a) est disposée dans le boîtier électronique (10a), l'unité de commande d'écran de visualisation (22a) étant raccordée à un bus de données/d'adresses (16) de l'unité de traitement de données (14) et l'unité de commande d'écran de visualisation (22a) étant reliée au multiplexeur vidéo (28) par le biais d'une ligne vidéo (29).

10. Arrangement selon l'une des revendications 1 à 6, au multiplexeur (58) duquel peuvent être acheminées au moins les données de prix et/ou de produit ainsi que les données de pesage et un code de caractère, respectivement par le biais d'une interface série (54, 64), et avec lequel un processeur graphique (68) qui convertit les données codées en caractères en données vidéo est connecté en aval du multiplexeur (58).

11. Arrangement selon l'une des revendications précédentes, dont l'unité d'interprétation (32, 32a) ou aussi, en plus, sa cellule de pesage (34), est intégrée dans le boîtier électronique (10).

12. Arrangement selon la revendication 11, dont l'unité d'interprétation (32) peut être alimentée en énergie électrique depuis une partie d'alimentation électrique (52) du boîtier électronique (10).

13. Arrangement selon l'une ou plusieurs des revendications 1 à 9, **caractérisé en ce qu'**au moins le multiplexeur (28 ; 58) et l'unité d'interprétation (32, 32a) sont disposés dans un boîtier (8 ; 8a) séparé du boîtier électronique (10a ; 10b).

14. Arrangement selon la revendication 13, avec lequel les sous-ensembles (28 ; 58, 32 ; 32a) disposés dans le boîtier (8 ; 8a) séparé peuvent être alimentés en énergie électrique par une deuxième partie d'alimentation électrique (52a) disposée dans le boîtier (8 ; 8a).

15. Arrangement selon la revendication 13, avec lequel les sous-ensembles (28 ; 58, 32 ; 32a) disposés dans le boîtier (8 ; 8a) séparé peuvent être alimentés en énergie électrique par la partie d'alimentation électrique (52) qui se trouve dans le boîtier électronique (10a ; 10b) par le biais d'une ligne d'alimentation en énergie, laquelle est acheminée conjointement avec une liaison de données série (62).
